# EUROPÄISCHE PATENTANMELDUNG

(11) **EP 4 627 979 A1**
(43) Veröffentlichungstag der Anmeldung: **08.10.2025**
(21) Anmeldenummer: 24168393.7
(22) Anmeldetag: 04.04.2024
(51) Int. Cl.: A47J 36/32, A47J 43/04

(54) **VERFAHREN ZUM BETREIBEN EINES KÜCHENGERÄTS, COMPUTERLESBARES SPEICHERMEDIUM UND KÜCHENGERÄT ZUR ZUBEREITUNG VON LEBENSMITTELN**

(71) Anmelder: Vorwerk & Co. Interholding GmbH, 42275 Wuppertal (DE)
(72) Erfinder: Pieper, Mirco, 42287 Wuppertal (DE)
(74) Vertreter: Cohausz & Florack

(57) **Zusammenfassung**

Die Erfindung betrifft ein Verfahren zum Betreiben eines Küchengeräts (2), bei dem ein Küchengerät (2) in einem ausgeschalteten Zustand bereitgestellt wird, bei dem ein ein Hochfahren des Küchengeräts (2) betreffender Befehl erfasst wird, bei dem als Reaktion auf den erfassten Befehl eine Steuerungseinrichtung (12) des Küchengeräts (2) angeschaltet wird und eine Hochfahrsequenz mit Programmanweisungen abgerufen wird, das dadurch gekennzeichnet ist, dass die Hochfahrsequenz einen ersten Sequenzabschnitt und einen zweiten Sequenzabschnitt aufweist, wobei der erste Sequenzabschnitt mindestens eine Programmanweisung zur Durchführung mindestens einer Basisfunktion des Küchengeräts (2), mindestens eine Programmanweisung zum Abrufen einer Nutzerinformation und mindestens eine Programmanweisung zum automatischen Anpassen des zweiten Sequenzabschnittes in Abhängigkeit von einer abgerufenen Nutzerinformation aufweist. Auch beschrieben sind ein computerlesbares Speichermedium und ein Küchengerät (2) zur Zubereitung von Lebensmitteln.

## Beschreibung

Die Erfindung betrifft ein Verfahren zum Betreiben eines Küchengeräts, bei dem ein Küchengerät in einem ausgeschalteten Zustand bereitgestellt wird, bei dem ein Hochfahren des Küchengeräts betreffender Befehl erfasst wird, bei dem als Reaktion auf den erfassten Befehl eine Steuerungseinrichtung des Küchengeräts angeschaltet wird und eine Hochfahrsequenz mit Programmanweisungen abgerufen wird. Die Erfindung betrifft weiter ein computerlesbares Speichermedium und ein Küchengerät zur Zubereitung von Lebensmitteln.

Küchengeräte der eingangs genannten Art sind bereits bekannt, insbesondere zum Verarbeiten von rohen oder halbfertigen Lebensmittelprodukten. Diese Küchengeräte weisen ein Grundgerät auf, mit dem separate Funktionsteile zusammenwirken, um je nach erzieltem Gericht, Getränk oder Ähnliches ein Lebensmittel zu verarbeiten. Funktionsteile werden in der Regel durch Küchengeräteanbieter als Zubehörteile verkauft, zum Beispiel als Kochgefäß, Gargefäß, Deckel, Schneide- oder Rühraufsatz. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachte Schnittstellen ein Antrieb eines beweglichen Bauteils des Zubehörteils durch einen in dem Grundgerät angeordneten Elektromotor erfolgen.

Moderne Küchengeräte weisen in der Regel eine Steuerungseinrichtung auf, die einen Prozessor und ein computerlesbares Speichermedium mit einem Algorithmus aufweist. Die Steuereinrichtung kann in dem Küchengerät integriert bzw. in einem Gehäuse des Küchengeräts angeordnet sein. Darüber hinaus kann die Steuereinrichtung durch eine oder mehrere externe Einheiten unterstützt oder gesteuert werden, wie zum Beispiel ein mobiles Funkgerät und / oder ein Server.

Zunehmend sehen Küchengerätehersteller eine Kommunikationsschnittstelle vor, die für einen Informationstransfer von oder zu der Steuereinrichtung eingerichtet ist. Die Steuereinrichtung ist in bevorzugter Weise mit der Kommunikationsschnittstelle durch eine bidirektionale Kommunikationsverbindung verbunden, so dass Informationen von der Steuereinrichtung an die Kommunikationsschnittstelle und auch von der Kommunikationsschnittstelle an die Steuereinrichtung ausgetauscht werden können.

Im Allgemeinen wird bei elektrischen Geräten und insbesondere bei Software betriebenen Geräten von einem angeschalteten Zustand gesprochen, bei dem das Gerät mit Strom versorgt ist und ggf. Funktionen ausführt, und von einem ausgeschalteten Zustand, bei dem das Gerät außer Strom gesetzt ist und keine Funktion ausführt. Auch ein Ruhezustand oder sogenannter "Stand-by" Zustand ist bekannt, bei dem das Gerät mit einem geringeren Energieverbrauch und vergleichsweise reduzierter Aktivität betrieben wird. Diese drei Zustände können jeweils einem Leistungszustand des Geräts zugeordnet sein, also "down state" für den ausgeschalteten Zustand, "low state" für den Ruhezustand und "normal state" für den angeschalteten Zustand. Dementsprechend wird ein Gerät aus einem ausgeschalteten Zustand in einen angeschalteten Zustand hochgefahren, wenn sein Leistungszustand von "down" auf "normal" geändert wird, und von einem Ruhezustand in einen angeschalteten Zustand, wenn sein Leistungszustand von "low" auf "normal" geändert wird.

Zum Hochfahren eines Küchengeräts aus einem ausgeschalteten Zustand ist es bekannt, einen entsprechenden Befehl zu erfassen, klassischerweise durch Empfangen eines elektrischen Signals, das durch einen Knopfdruck erzeugt worden ist. Auch das Erstellen einer Verbindung mit einer Energiequelle kann als Erfassen eines Befehls zum Hochfahren des Küchengeräts gelten. In der Regel wird dann, als Reaktion auf das Erfassen eines solchen Befehls, die Steuereinrichtung des Küchengeräts mit Energie versorgt und angeschaltet, und Programmanweisungen aus dem Algorithmus, der auf dem Speichermedium der Steuereinrichtung gespeichert ist, abgerufen und ausgeführt. Die ersten ausgeführten Programmanweisungen betreffen in der Regel einen sogenannten Bootvorgang, bei dem die Steuereinrichtung bzw. das Küchengerät in die Lage versetzt wird, bestimmungsgemäß in Betrieb genommen zu werden. Diese Programmanweisungen bilden zusammen eine Hochfahrsequenz.

Nachteilig bei bekannten Küchengräten ist, dass ein Hochfahren aus dem ausgeschalteten Zustand im Vergleich zum Beispiel zu einem Hochfahren aus einem Ruhezustand vergleichsweise lange dauert, so dass für den Nutzer eine bemerkbare Wartezeit entsteht. Gleichzeitig wird zunehmend erstrebt, für eine Umweltschonung den Energiebedarf elektrischer Geräte zu verringern und ein Ausschalten wird somit in der Regel bevorzugt.

Daneben verfügen in der Regel Küchengeräte über im Vergleich zu durchschnittlichen Personalcomputersystemen deutlich vereinfachte Hardware- und Software-Komponenten, so dass die Möglichkeiten einer Anpassung der Systemkonfiguration bei einem Küchengerät vergleichsweise eingeschränkt sind.

Vor diesem Hintergrund liegt der vorliegenden Erfindung die Aufgabe zu Grunde, den Betrieb von Küchengeräten zu verbessern, insbesondere ein Verfahren und Mittel für ein verbessertes Hochfahren eines Küchengeräts aus einem ausgeschalteten Zustand anzugeben.

Diese Aufgabe wird erfindungsgemäß mit einem Verfahren zum Betreiben eines Küchengeräts, bei dem ein Küchengerät in einem ausgeschalteten Zustand bereitgestellt wird, bei dem ein Hochfahren des Küchengeräts betreffender Befehl erfasst wird, bei dem als Reaktion auf den erfassten Befehl eine Steuerungseinrichtung des Küchengeräts angeschaltet wird und eine Hochfahrsequenz mit Programmanweisungen abgerufen wird, dadurch gelöst, dass die Hochfahrsequenz einen ersten Sequenzabschnitt und einen zweiten Sequenzabschnitt aufweist, wobei der erste Sequenzabschnitt mindestens eine Programmanweisung zur Durchführung mindestens einer Basisfunktion des Küchengeräts, mindestens eine Programmanweisung zum Abrufen einer Nutzerinformation und mindestens eine Programmanweisung zum automatischen Anpassen des zweiten Sequenzabschnittes in Abhängigkeit von einer abgerufenen Nutzerinformation aufweist, und dass entsprechend der Programmanweisungen der Hochfahrsequenz mindestens eine Basisfunktion des Küchengeräts durchgeführt wird, mindestens eine Nutzerinformation abgerufen wird und der zweite Sequenzabschnitt der Hochfahrsequenz in Abhängigkeit von der mindestens einen abgerufenen Nutzerinformation zumindest teilweise angepasst wird.

Somit wird eine im Vergleich zu bisher bekannten Hochfahrvorgängen verkürzte Hochfahrzeit bzw. sogenannte "Boot-Zeit" für das Betriebssystem des Küchengeräts erreicht, so dass ein Hochfahren des Küchengeräts aus einem vollständig ausgeschalteten Zustand mit einem Hochfahren aus einem Ruhezustand vergleichbar macht. Damit ist das Küchengerät insgesamt bedarfsgerecht schnell einsetzbar, und es kann auf einen Betrieb in einem Ruhezustand bzw. auf einen Stand-by-Betrieb verzichtet werden.

Gleichzeitig werden einem Nutzer Funktionen des Küchengeräts möglichst früh zu Verfügung gestellt, die an sein Nutzungsverhalten und / oder seine Vorlieben automatisch angepasst sind. Dadurch wird die Bedienungsfreundlichkeit des Küchengeräts gesteigert. Ferner kann die Hochfahrsequenz bzw. das Hochfahren des Küchengeräts aus dem vollständig ausgeschalteten Zustand an eine Änderung des Nutzerverhaltens automatisch angepasst werden.

Die zuvor genannte Aufgabe wird erfindungsgemäß weiterhin mit einem computerlesbaren Speichermedium mit Programmanweisungen gelöst, die, wenn von einer Vorrichtung ausgeführt, die Vorrichtung dazu veranlassen, ein Verfahren nach der vorliegenden Offenbarung durchzuführen.

Die zuvor genannte Aufgabe wird erfindungsgemäß weiterhin mit einem Küchengerät zur Zubereitung von Lebensmitteln, mit einer Steuerungseinrichtung und mit einer Kommunikationsschnittstelle dadurch gelöst, dass die Steuerungseinrichtung ein computerlesbares Speichermedium nach der vorliegenden Offenbarung aufweist.

Das computerlesbare Speichermedium und das Küchengerät weisen die gleichen Vorteile auf wie das vorliegend offenbarte Verfahren.

Im Folgenden werden verschiedene Ausführungsformen der Erfindung bzw. des Verfahrens, des computerlesbares Speichermediums und des Küchengeräts offenbart, wobei die Offenbarung für die einzelnen Ausführungsformen jeweils unabhängig voneinander und auch für beliebige Kombinationen dieser Ausführungsformen miteinander gilt.

Bei einer Ausführungsform des Verfahrens ist vorgesehen, dass die mindestens eine abgerufene Nutzerinformation einer Nutzerinformation entspricht, die bei einem früheren Betreiben des Küchengeräts erfasst wurde.

Somit kann das Hochfahren an eine frühere Nutzung des Küchengeräts oder an eine Nutzereingabe aus einem vergangenen Vorgang am Küchengerät angepasst werden. Beispielsweise kann als Nutzerinformation vermerkt werden, welche Funktion des Küchengeräts bei einer Nutzung als erste oder als letzte verwendet wird, und diese dann beim darauffolgenden Hochfahren des Küchengeräts zur Verfügung gestellt werden.

Bei einer Ausführungsform des Verfahrens ist vorgesehen, dass beim Abrufen der mindestens einen Nutzerinformation eine erste Nutzerinformation und eine zweite Nutzerinformation abgerufen werden, wobei die erste Nutzerinformation bei einem ersten Zeitpunkt erfasst worden ist und die zweite Nutzerinformation bei einem zweiten, nach dem ersten Zeitpunkt angeordneten Zeitpunkt erfasst worden ist, dass die zweite Nutzerinformation mit der ersten Nutzerinformation verglichen wird, dass aus dem Vergleich eine Übereinstimmung oder eine Veränderung bestimmt wird, dass im Falle einer Übereinstimmung der zweite Sequenzabschnitt der Hochfahrsequenz unverändert gelassen wird, und dass im Fall einer Veränderung der zweite Sequenzabschnitt der Hochfahrsequenz entsprechend verändert wird.

Auf diese Weise kann die Hochfahrsequenz bzw. das Hochfahren des Küchengeräts an eine Änderung einer Nutzerinformation angepasst werden, wobei diese Änderung über mehrere Nutzungsvorgänge des Küchengeräts abläuft. So kann beispielsweise bei einer ersten Nutzung erfasst werden, dass ein Nutzer eine erste Funktion des Küchengeräts am liebsten hat. Bei einer späteren Nutzung kann dann festgestellt werden, dass der Nutzer nun eine andere Funktion bevorzugt. Bei einem späteren Hochfahren des Küchengeräts kann dann die zuletzt bevorzugte Funktion zur Verfügung gestellt werden.

In einer weiteren Variante kann die zweite Nutzerinformation beispielsweise auf einem Server hinterlegt werden, während das Küchengerät in einem ausgeschalteten Zustand ist. Beim nächsten Hochfahren des Küchengeräts kann die Änderung dann automatisch berücksichtigt werden und die Hochfahrsequenz automatisch an die geänderte Informationslage angepasst werden.

Bei einer Ausführungsform des Verfahrens ist vorgesehen, dass die mindestens eine Basisfunktion ein Element aus der Liste ist: Durchführen einer durch einen Betriebssystemkernel vorgegebene Funktion, Hochfahren einer Kommunikationsschnittstelle, Hochfahren einer Benutzerkommunikationsschnittstelle, Hochfahren einer Nutzerschnittstelle, Bereitstellen einer graphischen Nutzerschnittstellenstruktur, Erstellen einer Kommunikationsverbindung mit einem Telekommunikationsnetzwerk, Erstellen einer Kommunikationsverbindung mit einem externen Gerät, Erstellen einer Kommunikationsverbindung mit einem externen Server.

Somit wird das Küchengerät in die Lage gebracht, weitere, auf die mindestens eine Basisfunktion aufbauende Funktionen auszuführen. So wird beispielsweise durch Ausführen einer durch einen Betriebssystemkernel vorgegebenen Funktion die Grundlage geschaffen, um weitere Programmanweisungen abzurufen und durchzuführen. Mit Bereitstellen einer graphischen Benutzerschnittstellenstruktur oder eines GUI-Frameworks (Graphical User Interface - Framework) wird die Möglichkeit geschaffen, Funktionen wie eine Anzeige eines Bedienungsmenüs oder ein Erfassen einer Nutzerinformation oder Nutzereingabe bereitzustellen oder auszuführen.

Bei einer Ausführungsform des Verfahrens ist vorgesehen, dass der zweite Sequenzabschnitt mindestens eine Programmanweisung zum Bereitstellen einer Funktion des Küchengeräts aufweist, wobei die Funktion des Küchengeräts ein Element aus der Liste betrifft: ein Kochrezept, eine Wiegefunktion, eine Heizfunktion, eine Schneidefunktion, eine Rührfunktion, eine Garfunktion, eine Bratfunktion, eine Menüanzeige, Anzeige einer personalisierten Menüanzeige, eine Empfehlungsfunktion, eine Reinigungsfunktion, eine Lebensmittelzubereitungsfunktion, eine Kochfunktion, eine Anwendungsumgebung, ein Bedienungsfeld in der Darstellung eines Bedienungsmenüs, einen Schnellzugriff, eine Anzeige eines Internetinhaltes, ein WebView, einen Wochenplaner, eine Nutzerfavoritenverwaltung, einen Zugang zum Internet, eine sprachunterstütze Bedienung, eine vordefinierte Voreinstellung, einen Betriebsmodus des Küchengeräts.

Dadurch kann die Steuerung des Küchengeräts personalisiert werden. Insbesondere erleichtert ein Zurverfügungstellen solcher Funktionen bereits beim Hochfahren des Küchengeräts den darauffolgenden Betrieb des Küchengeräts und steigert somit insgesamt die Nutzerfreundlichkeit der Bedienung des Küchengeräts auch nach dem Hochfahren.

Eine sprachunterstütze Bedienung kann ein Aussprechen von Bedienungsoptionen durch das Küchengerät und / oder ein Erfassen von Nutzereingaben in Form von Sprache durch das Küchengerät umfassen.

Für die Funktion "Wochenplaner" kann die entsprechende Programmanweisung dem Veranlassen eines Hochladens von Daten aus dem Internet oder aus einem Server entsprechen. Hierbei können die Daten Nutzerinformationen in Form von Terminangaben sein. Für einen Schnellzugriff, beispielsweise auf Funktionen wie Wiegen, Reinigen, Betriebsmodus zum Kochen von Reis oder Weiteres können Nutzerinformationen abgerufen werden, die auf einem Speichermedium des Küchengeräts hinterlegt sind. Bei einer Nutzerfavoritenverwaltung können Favoriten anhand von Nutzerinformationen bestimmt werden, die auf einem externen Server oder mobilen Funkgerät und / oder auf einem Speichermedium des Küchengeräts hinterlegt sind. Der Betriebsmodus des Küchengeräts kann ein Betriebsmodus sein, der als durch einen Nutzer bevorzugter Betriebsmodus identifiziert ist, beispielsweise anhand eines Nutzerprofils und / oder einer Nutzungshistorie. Dadurch kann eine häufig verwendete Funktion wie zum Beispiel eine Wiege- oder Kochfunktion automatisch zur Verfügung gestellt werden, und so auch die Benutzerfreundlichkeit des Küchengeräts gesteigert werden.

Bei einer Ausführungsform des Verfahrens ist vorgesehen, dass der zweite Sequenzabschnitt der Hochfahrsequenz in Abhängigkeit von der mindestens einen abgerufenen Nutzerinformation zumindest teilweise dadurch angepasst wird, dass mindestens eine Funktion des Küchengeräts in Abhängigkeit von der mindestens einen abgerufenen Nutzerinformation ausgewählt wird.

Dadurch können die beim Hochfahren des Küchengeräts zur Verfügung gestellten Funktionen für einen Nutzer individuell angepasst werden. Beispielsweise kann eine Funktion, die gemäß einer abgerufenen Nutzerinformation als in der Vergangenheit vorrangig verwendet wurde, aus einer Liste mehrerer Funktionen ausgewählt werden.

So kann beim Verfahren vorgesehen sein, dass eine Sammlung von Programmanweisungen, die jeweils eine Funktion des Küchengeräts betreffen, auf einem Speichermedium oder auf einem externen Server hinterlegt ist, und dass eine Programmanweisung aus der Sammlung in Abhängigkeit von der abgerufenen Nutzerinformation automatisch ausgewählt und dem zweiten Sequenzabschnitt der Hochfahrsequenz hinzugefügt wird. Dadurch kann beim Hochfahren des Küchengeräts eine für den Nutzer individuell angepasste Hochfahrsequenz aufgebaut oder ergänzt werden, so dass entsprechend adäquate Funktionen dem Nutzer zur Verfügung gestellt werden.

Bei einer Ausführungsform des Verfahrens ist vorgesehen, dass der zweite Sequenzabschnitt der Hochfahrsequenz in Abhängigkeit von der mindestens einen abgerufenen Nutzerinformation zumindest teilweise dadurch angepasst wird, dass eine Reihenfolge, mit der Funktionen des Küchengeräts bereitzustellen sind, in Abhängigkeit von der mindestens einen abgerufenen Nutzerinformation angepasst wird.

Auf diese Weise können dem Nutzer Funktionen des Küchengeräts zuerst zur Verfügung gestellt werden, die für ihn die höchste Relevanz aufweisen. Daneben kann eine Priorisierung der Programmanweisungen bzw. der Verfahrensschritte beim Hochfahren des Küchengeräts erfolgen, so dass die für einen bestimmten Nutzer wichtigsten Funktionen nach kürzester Zeit breitgestellt werden. Insgesamt werden dadurch die Nutzerfreundlichkeit und der Nutzungskomfort beim Hochfahren des Küchengeräts gesteigert.

Bei einer Ausführungsform des Verfahrens ist vorgesehen, dass der zweite Sequenzabschnitt der Hochfahrsequenz in Abhängigkeit von der mindestens einen abgerufenen Nutzerinformation zumindest teilweise dadurch angepasst wird, dass eine Dauer für den zweiten Sequenzabschnitt in Abhängigkeit von der mindestens einen abgerufenen Nutzerinformation angepasst wird.

Somit kann die Wartezeit für einen Nutzer, bis eine für ihn relevante Funktion des Küchengeräts zur Verfügung steht, reduziert werden. Vorzugsweise entspricht die Dauer einer Zeit, die zur Ausführung einer Reihenfolge von mindestens zwei Prorammanweisungen aus dem zweiten Sequenzabschnitt erforderlich ist. Dabei kann die Dauer der Zeit entsprechen, die sich vom Beginn des zweiten Sequenzabschnittes bis zum Zeitpunkt, an dem eine bestimmte Funktion des Küchengeräts zur Verfügung steht, erstreckt. Alternativ kann die Dauer der Zeit entsprechen, die zur Ausführung des gesamten zweiten Sequenzabschnittes erforderlich ist.

Bei einer Ausführungsform des Verfahrens ist vorgesehen, dass eine Anzahl an Funktionen, die beim Ausführen der Programmanweisungen der Hochfahrsequenz, insbesondere des zweiten Sequenzabschnittes der Hochfahrsequenz, durchgeführt werden sollen, vordefiniert ist.

Auf diese Weise kann die Dauer des Hochfahrens des Küchengeräts gesteuert, insbesondere eingeschränkt werden. Die Anzahl kann seitens des Küchengerätherstellers vordefiniert sein, alternativ nachträglich durch einen Nutzer. Die Anzahl kann als Parameter hinterlegt sein, das durch gezielten Zugriff angepasst werden kann, beispielsweise im Rahmen eines Nutzerprofils.

Bei einer Ausführungsform des Verfahrens ist vorgesehen, dass die mindestens eine Nutzerinformation mindestens einem Element aus der folgenden Liste entspricht: Angabe aus einem Nutzerprofil, Information aus einer Nutzungshistorie des Küchengeräts, Information aus einer Nutzereingabe, Information aus einem erfassten Nutzerverhalten, Information über eine Nutzervorliebe.

Somit können sämtliche Aspekte, die einen Nutzer und seine individuellen Vorlieben betreffen, für die Anpassung der Hochfahrsequenz berücksichtigt und eine erhöhte Individualisierung der Hochfahrsequenz erreicht werden.

Das Nutzerprofil kann auf einem externen Server hinterlegt sein. Die Nutzereingabe kann durch ein Erfassungsmittel oder die Kommunikationsschnittstelle am Küchengerät erfasst werden. Eine Nutzerhistorie kann eine Information über die Häufigkeit der Verwendung bestimmter Funktionen des Küchengeräts aufweisen, die Rückschlüsse auf eine Nutzervorliebe oder auf ein Nutzerverhalten erlaubt.

Bei einer Ausführungsform des Verfahrens ist vorgesehen, dass die mindestens eine Nutzerinformation eine Nutzungshäufigkeit des Küchengeräts betrifft.

Dadurch können Funktionen einfach und schnell zugänglich automatisch zur Verfügung gestellt werden, die ein Nutzer am häufigsten verwendet. Daneben kann ein vordefinierter Ablauf bei zum Beispiel einem ersten Hochfahren des Küchengeräts automatisch zur Verfügung gestellt werden. Ein weiterer Vorteil ist, dass ein erstes Anwenden einer Funktion erfasst und für zum Beispiel eine Anpassung der Reihenfolge im Sequenzabschnitt der Hochfahrsequenz herangezogen werden kann.

Die Nutzungshäufigkeit kann mindestens ein Element aus der Liste aufweisen, wobei diese Liste nicht abschließend ist: eine Anzahl von Anwendungen einer Funktion des Küchengeräts; eine Information über eine erste Anwendung einer Funktion des Küchengeräts, eine Anzahl an Anwendungen einer Funktion des Küchengeräts pro Zeiteinheit, eine Einstufung der Häufigkeit einer Nutzung einer Funktion des Küchengeräts relativ zur Nutzung einer weiteren Funktion des Küchengeräts.

Bei einer Ausführungsform des Verfahrens ist vorgesehen, dass die mindestens eine Nutzerinformation aus einem Speichermedium abgerufen wird, wobei das Speichermedium Teil des Küchengeräts ist, oder dass die mindestens eine Nutzerinformation aus einem Speichermedium abgerufen wird, wobei das Speichermedium Teil eines externen Geräts, insbesondere eines externen Servers oder eines mobilen Funkgeräts, ist.

Ein lokales Hinterlegen von Nutzerinformationen auf einem Speichermedium des Küchengeräts ermöglicht ein vereinfachtes und zügiges Abrufen für die Anpassung des zweiten Sequenzprotokolls. Daneben bietet ein Hinterlegen der Nutzerinformationen auf einer externen Einheit eine erweiterte Flexibilität bei der Änderung der Nutzerinformationen, beispielsweise während das Küchengerät ausgeschaltet ist, möglicherweise auch höhere Speicherkapazitäten als ein lokales Speichermedium an.

Bei einer Ausführungsform des Küchengeräts ist vorgesehen, dass die Kommunikationsschnittstelle dazu eingerichtet ist, die mindestens eine Nutzerinformation abzurufen und / oder die Hochfahrsequenz abzurufen.

Die Kommunikationsschnittstelle kann für eine Kommunikationsverbindung mit einem lokalen Speichermedium des Küchengeräts, alternativ oder zusätzlich für eine Kommunikationsverbindung mit einem externen Server oder mobilen Funkgerät ausgebildet sein. Die Kommunikationsverbindung kann jeweils drahtlos, zum Beispiel über WLAN, WIFI, Bluetooth oder Ähnliches, oder über einen USB-Port oder Teil eines elektronischen Kommunikations-Bus-Systems ausgebildet sein.

Das Küchengerät kann ferner eine Nutzerschnittstelle aufweisen, die zur Informationsausgabe für einen Nutzer eingerichtet ist. Zusätzlich kann die Nutzerschnittstelle für ein Erfassen einer Nutzerinformation oder Nutzereingabe ausgebildet sein. Die Nutzerschnittelle kann in Form einer akustischen, haptischen oder optischen Anzeige aufweisen, aber auch eine Schnittstelle zum Weiterleiten von Informationen an ein Nutzerendgerät oder ein mobiles Funkgerät wie zum Beispiel ein Smartphone sein. So kann die Nutzerschnittstelle Informationen, insbesondere über Funktionen des Küchengeräts unmittelbar, das heißt zum Beispiel selbst als Display, oder mittelbar über ein Nutzerendgerät zur Verfügung stellen.

Weitere Merkmale und Vorteile der Erfindung ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel für ein Verfahren zum Betreiben eines Küchengeräts als Flussdiagramm,
- Fig. 2: ein Ausführungsbeispiel für ein Küchengerät und
- Fig. 3: ein Ausführungsbeispiel für eine personalisierte Menüanzeige für ein Küchengerät.

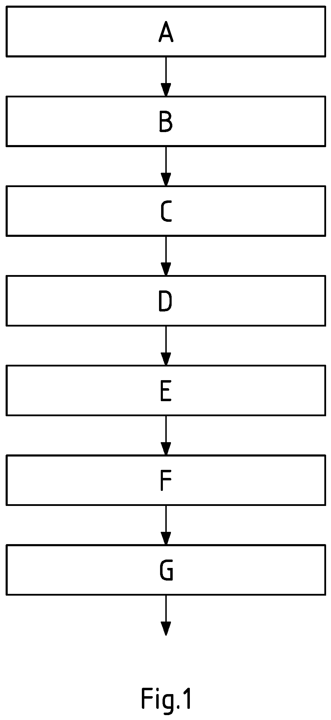

Fig. 1 zeigt ein Ausführungsbeispiel für ein Verfahren zum Betreiben eines Küchengeräts als Flussdiagramm. In einem Schritt A wird ein Küchengerät in einem ausgeschalteten Zustand bereitgestellt wird. In einem Schritt B wird ein Hochfahren des Küchengeräts betreffender Befehl erfasst. In einem Schritt C wird, als Reaktion auf den erfassten Befehl, eine Steuerungseinrichtung des Küchengeräts angeschaltet. In einem Schritt D wird eine Hochfahrsequenz mit Programmanweisungen abgerufen.

Entsprechend der Programmanweisungen eines ersten Sequenzabschnittes der Hochfahrsequenz werden, jeweils als Basisfunktion des Küchengeräts, ein Netzwerk-Setup durchgeführt (Schritt E) und ein GUI-Framework bereitgestellt (Schritt F). In einem Schritt G wird eine Nutzerinformation abgerufen und in einem Schritt H ein zweiter Sequenzabschnitt der Hochfahrsequenz in Abhängigkeit von der mindestens einen abgerufenen Nutzerinformation zumindest teilweise angepasst. Im Ergebnis weist der zweite Sequenzabschnitt Programmanweisungen zum Bereitstellen von einer Mehrzahl an Kochfunktionen, einer Anwendungsumgebung, Schnellzugriffen, einer Anzeige eines Internetinhaltes oder WebView, einem Wochenplaner, einer Liste von Nutzerfavoriten, einem Zugang zu vorbestimmten Internetseiten und einer sprachunterstütze Bedienung auf.

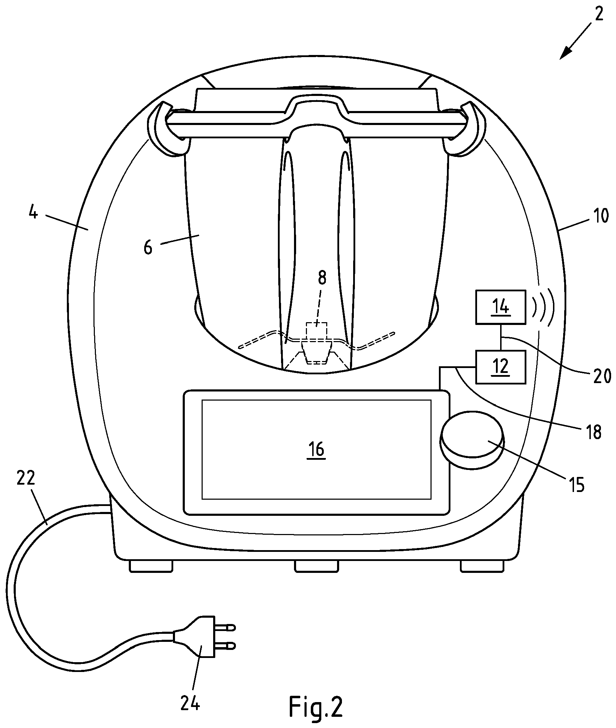

Fig. 2 zeigt ein Ausführungsbeispiel für ein Küchengerät 2 zur Zubereitung von Lebensmitteln. Das Küchengerät 2 weist ein Grundgerät 4, ein Aufnahmegefäß 6 und eine Schneideeinheit 8 zum Verarbeiten von Lebensmitteln auf.

Das Grundgerät 4 weist ein Gehäuse 10, eine Steuerungseinrichtung 12, eine Kommunikationsschnittstelle 14, ein Ein- und Ausschaltknopf 15 und eine Nutzerschnittstelle 16 in Form eines berührungsempfindlichen Bildschirmes auf, wobei die Steuerungseinrichtung 12 in dem Gehäuse 10 angeordnet ist. Die Steuerungseinrichtung 12, die Kommunikationsschnittstelle 14, der Ein- und Ausschaltknopf 15 und die Nutzerschnittstelle 16 sind über Kabelverbindungen 18, 20 für Datentransfer miteinander verbunden. Die Kommunikationsschnittstelle 14 ist für eine Kommunikationsverbindung mit einem externen Server über Internet via WLAN und für eine Kommunikationsverbindung mit einem mobilen Funkgerät über Bluetooth eingerichtet.

Der Ein- und Ausschaltknopf 15 ist zum Einschalten des Küchengeräts 2 vorgesehen, wobei mit einer Betätigung des Ein- und Ausschaltknopfs 15 elektrische Komponente des Grundgeräts unter Spannung gesetzt bzw. mit einem Strom versorgt werden können.

Das Grundgerät 4 ist für eine Verbindung mit einem elektrischen Versorgungsnetzwerk ausgebildet, indem es ein Kabel 22 und eine Steckdose 24 aufweist. Die Verbindung dient der Energieversorgung der elektrisch betriebenen Bauteile des Grundgeräts 4, mitunter der Steuerungseinrichtung 12, der Kommunikationsschnittstelle 14 und der Nutzerschnittstelle 16. In einem ausgeschalteten Zustand sind die die Steuerungseinrichtung 12, die Kommunikationsschnittstelle 14 und die Nutzerschnittstelle 16 nicht unter elektrischer Spannung gesetzt. In einem Ruhezustand oder in einem angeschalteten Zustand sind die Steuerungseinrichtung 12, die Kommunikationsschnittstelle 14 und die Nutzerschnittstelle 16 jeweils unter elektrischer Spannung gesetzt.

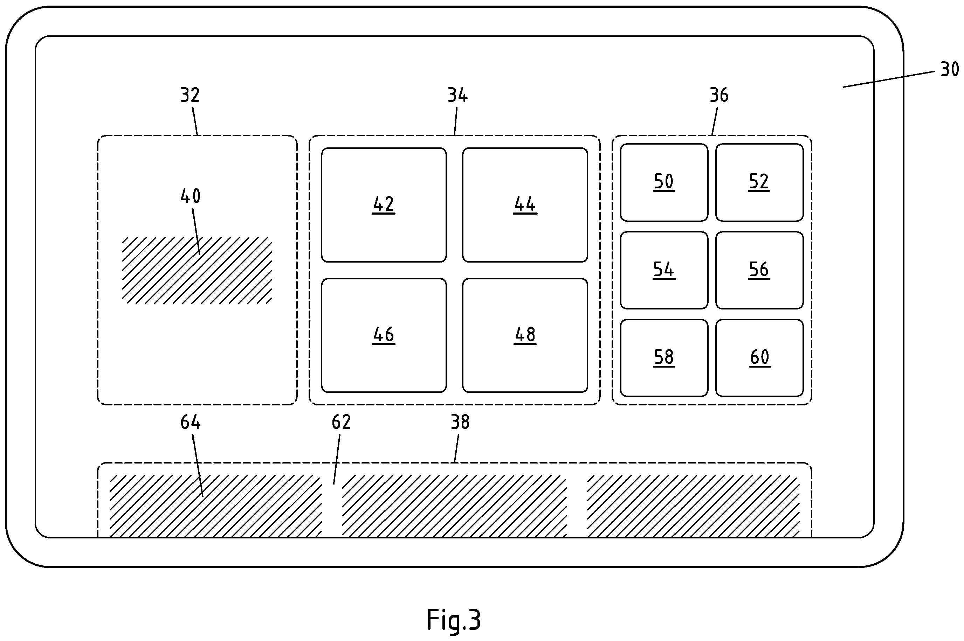

Fig. 3 zeigt ein Ausführungsbeispiel für eine personalisierte Menüanzeige 30 für ein Küchengerät, beispielsweise für ein Küchengerät, wie mit der Fig. 2 gezeigt. Die Menüanzeige 30 weist mehrere Bereiche auf, mit denen Funktionen des Küchengeräts zur Verfügung gestellt sind: einen Bereich 32 für einen Wochenplaner, einen Bereich 34 für Schnellzugriffe, einen Bereich 36 mit einer Auswahl an Lebensmitteln, mit denen Voreinstellungen und Steuerungsmodi verknüpft sind, und einen Bereich 38 mit einer Auswahl an Favoriten oder Empfehlungen.

Die Menüanzeige 30 resultiert aus einem Hochfahren eines Küchengeräts aus einem ausgeschalteten Zustand. Wobei eine Hochfahrsequenz mit Programmanweisungen zum Bereitstellen einer graphischen Benutzerschnittstellenstruktur und Programmanweisungen zum Anzeigen eines Menüs ausgeführt wurde. Die Menüanzeige 30 ist insofern personalisiert, dass die in den Bereichen 32 bis 38 angezeigten bzw. zur Verfügung gestellten Funktionen in Abhängigkeit von Nutzerinformationen beim Hochfahren des Küchengeräts ausgewählt worden sind.

Mit dem Wochenplaner sollen WEBViews 40 angezeigt werden, die aktiv via Internetverbindung geladen werden. Bei dieser Funktion werden Inhalte angezeigt, die nicht lokal am Küchengerät, sondern extern hinterlegt sind. Dadurch kann der Inhalt der WEBViews 40 unabhängig vom Zustand des Kochgeräts angepasst worden sein. Mit Durchführen der Funktion "Planer" wird ein Browser geladen, über den die WEBViews dann angezeigt werden.

Die für die in der Fig. 3 angezeigten Schnellzugriffe 42, 44, 46, 48 betreffen einen Steuerungsmodus des Küchengeräts für ein manuelles Kochen, eine Wiegefunktion, ein Reinigungsmodus, und ein Reiskochmodus. Dabei handelt es sich um Voreinstellungen bzw. voreingestellte Steuerungsmodi, die lokal am Küchengerät hinterlegt sind und somit zeitnah abrufbar sind.

In dem Bereich mit den angezeigten Lebensmitteln 50, 52, 54, 56, 58, 60 werden Voreinstellungen und Steuerungsmodi des Küchengeräts zur Verfügung gestellt, die für die Zubereitung der angezeigten Lebensmittel zutreffend sind. Diese Voreinstellungen und Steuerungsmodi können bereits lokal am Küchengerät hinterlegt sein. Ergänzend können zusätzliche Voreinstellungen und Steuerungsmodi aus einem externen Server auf einem lokalen Speicher heruntergeladen werden, wenn ein Lebensmittel geändert, hinzugefügt oder im Zusammenhang mit einem Kochrezept über eine Softwareanwendung geändert wird.

Favoriten und / oder Empfehlungen 62 werden anhand eines erfassten Nutzungsverhaltens auf dem Server ermittelt. Hierbei können Nutzerinformationen verwendet werden, die nicht auf dem Kochgerät entstanden sind, sondern durch eine externe Quelle geliefert werden. Vorliegend wurden die angezeigten Favoriten und / oder Empfehlungen 62 anhand einer Suche nach Kochrezepten durch den Nutzer in einer mobilen Anwendungssoftware auf einem mobilen Funkgerät ermittelt. Die ermittelten Favoriten und / oder Empfehlungen 62 sind durch eine Kommunikationsschnittstelle des Küchengeräts abgerufen worden und bei der Anpassung der Hochfahrsequenz berücksichtigt worden. Für die Anzeige der Favoriten und / oder Empfehlungen können WEBViews 64 und / oder lokal gespeicherte Daten verwendet werden. Bei einer teilweise "lokalen" Realisierung können Informationsfelder wie z.B. Ratingsterne mit Werten aus Online-Informationen gefüllt werden.

Im Folgenden werden Beispiele für eine Hochfahrsequenz zum Hochfahren eines Küchengeräts aus einem ausgeschalteten Zustand aufgezeigt. Angegeben sind die Funktionen, die durch Ausführen der Programmanweisungen der Hochfahrsequenz durch das Küchengerät durchgeführt bzw. zur Verfügung gestellt werden, wobei die Reihenfolge, mit welcher Funktionen angegeben sind, der zeitlichen Reihenfolge der Durchführung entspricht.

Erstes Beispiel: "personalisierte Menüanzeige"
1. Betriebssystemkernel mit Netzwerk-Setup;
2. GUI-Framework (Homescreen-Struktur);
3. Anzeige eines personalisierten Menüs und Bereitstellen folgender Funktionen: Kochfunktionen, Framework für individuelle Anwendungen, Schnellzugriffe, WEBViews, Wochenplaner, Favoriten, Links zu WEBPages, Sprachunterstützung.

Die Programmanweisungen für die Funktionen 1 und 2 gehören einem ersten Sequenzabschnitt der Hochfahrsequenz und die Programmanweisungen für die Funktion 3 gehört einem zweiten Sequenzabschnitt der Hochfahrsequenz.

Zweites Beispiel: "schnelles manuelles Kochen und schneller Waagenzugriff"
1. Betriebssystemkernel mit Netzwerk-Setup;
2. Anzeige eines Bedienungsfelds zur Auswahl eines Kochmodus mit manuellem Zugriff auf ein Wiegemodul des Küchengeräts;
3. Anzeige einer WebPage.

Die Programmanweisungen für die Funktion 1 gehören einem ersten Sequenzabschnitt der Hochfahrsequenz und die Programmanweisungen für die Funktionen 2 und 3 gehören einem zweiten Sequenzabschnitt der Hochfahrsequenz.

Drittes Beispiel: "schnelle Rezeptsuche"
1. Betriebssystemkernel mit Netzwerk-Setup
2. Anzeige einer WebPage
3. Anzeige eines personalisierten Hauptmenüs

Die Programmanweisungen für die Funktion 1 gehören einem ersten Sequenzabschnitt der Hochfahrsequenz und die Programmanweisungen für die Funktionen 2 und 3 gehören einem zweiten Sequenzabschnitt der Hochfahrsequenz.

Die Dauer der einzelnen Funktionen 1, 2 oder 3 können der Größenordnung von ein paar Sekunden sein, beispielsweise etwa 10 bis 20 Sekunden, so dass den Ablauf der Hochfahrsequenz unter einer Minute dauern kann, vorzugsweise gleich oder unter 50 Sekunden, weiter bevorzugt gleich oder unter 40 Sekunden.

## Patentansprüche

1. Verfahren zum Betreiben eines Küchengeräts (2),
- bei dem ein Küchengerät (2) in einem ausgeschalteten Zustand bereitgestellt wird,
- bei dem ein Hochfahren des Küchengeräts (2) betreffender Befehl erfasst wird,
- bei dem als Reaktion auf den erfassten Befehl eine Steuerungseinrichtung (12) des Küchengeräts (2) angeschaltet wird und eine Hochfahrsequenz mit Programmanweisungen abgerufen wird,
**dadurch gekennzeichnet,**
- **dass** die Hochfahrsequenz einen ersten Sequenzabschnitt und einen zweiten Sequenzabschnitt aufweist,
- wobei der erste Sequenzabschnitt mindestens eine Programmanweisung zur Durchführung mindestens einer Basisfunktion des Küchengeräts (2), mindestens eine Programmanweisung zum Abrufen einer Nutzerinformation und mindestens eine Programmanweisung zum automatischen Anpassen des zweiten Sequenzabschnittes in Abhängigkeit von einer abgerufenen Nutzerinformation aufweist, und
- **dass** entsprechend der Programmanweisungen der Hochfahrsequenz mindestens eine Basisfunktion des Küchengeräts (2) durchgeführt wird, mindestens eine Nutzerinformation abgerufen wird und der zweite Sequenzabschnitt der Hochfahrsequenz in Abhängigkeit von der mindestens einen abgerufenen Nutzerinformation zumindest teilweise angepasst wird.

2. Verfahren nach Anspruch 1,
**dadurch gekennzeichnet,**
**dass** die mindestens eine abgerufene Nutzerinformation einer Nutzerinformation entspricht, die bei einem früheren Betreiben des Küchengeräts (2) erfasst wurde.

3. Verfahren nach einem der voranstehenden Ansprüche,
**dadurch gekennzeichnet,**
- **dass** beim Abrufen der mindestens einen Nutzerinformation eine erste Nutzerinformation und eine zweite Nutzerinformation abgerufen wird,
- wobei die erste Nutzerinformation bei einem ersten Zeitpunkt erfasst worden ist und die zweite Nutzerinformation bei einem zweiten, nach dem ersten Zeitpunkt angeordneten Zeitpunkt erfasst worden ist,
- **dass** die zweite Nutzerinformation mit der ersten Nutzerinformation verglichen wird,
- **dass** aus dem Vergleich eine Übereinstimmung oder eine Veränderung bestimmt wird,
- **dass** im Falle einer Übereinstimmung der zweite Sequenzabschnitt der Hochfahrsequenz unverändert gelassen wird, und
- **dass** im Fall einer Veränderung der zweite Sequenzabschnitt der Hochfahrsequenz entsprechend verändert wird.

4. Verfahren nach einem der voranstehenden Ansprüche,
**dadurch gekennzeichnet,**
**dass** die mindestens eine Basisfunktion ein Element aus der Liste ist:
Durchführen einer durch einen Betriebssystemkernel vorgegebenen Funktion, Hochfahren einer Kommunikationsschnittstelle (14), Hochfahren einer Nutzerschnittstelle (16), Bereitstellen einer graphischen
Nutzerschnittstellenstruktur, Erstellen einer Kommunikationsverbindung mit einem Telekommunikationsnetzwerk, Erstellen einer
Kommunikationsverbindung mit einem externen Gerät, Erstellen einer Kommunikationsverbindung mit einem externen Server.

5. Verfahren nach einem der voranstehenden Ansprüche,
**dadurch gekennzeichnet,**
- **dass** der zweite Sequenzabschnitt mindestens eine Programmanweisung zum Bereitstellen einer Funktion des Küchengeräts (2) aufweist,
- wobei die Funktion des Küchengeräts (2) ein Element aus der Liste betrifft: ein Kochrezept, eine Wiegefunktion, eine Heizfunktion, eine Schneidefunktion, eine Rührfunktion, eine Garfunktion, eine Bratfunktion, eine Menüanzeige, Anzeige einer personalisierten Menüanzeige (30), eine Empfehlungsfunktion, eine Reinigungsfunktion, eine Lebensmittelzubereitungsfunktion, eine Kochfunktion, eine Anwendungsumgebung, ein Bedienungsfeld in der Darstellung eines Bedienungsmenüs, einen Schnellzugriff, eine Anzeige eines Internetinhaltes, ein WebView, einen Wochenplaner, eine Nutzerfavoritenverwaltung, einen Zugang zum Internet, eine sprachunterstütze Bedienung, eine vordefinierte Voreinstellung, einen Betriebsmodus des Küchengeräts (2).

6. Verfahren nach einem der voranstehenden Ansprüche,
**dadurch gekennzeichnet,**
**dass** der zweite Sequenzabschnitt der Hochfahrsequenz in Abhängigkeit von der mindestens einen abgerufenen Nutzerinformation zumindest teilweise dadurch angepasst wird, dass mindestens eine Funktion des Küchengeräts (2) in Abhängigkeit von der mindestens einen abgerufenen Nutzerinformation ausgewählt wird.

7. Verfahren nach einem der voranstehenden Ansprüche,
**dadurch gekennzeichnet,**
**dass** der zweite Sequenzabschnitt der Hochfahrsequenz in Abhängigkeit von der mindestens einen abgerufenen Nutzerinformation zumindest teilweise dadurch angepasst wird, dass eine Reihenfolge, mit der Funktionen des Küchengeräts (2) bereitzustellen sind, in Abhängigkeit von der mindestens einen abgerufenen Nutzerinformation angepasst wird.

8. Verfahren nach einem der voranstehenden Ansprüche,
**dadurch gekennzeichnet,**
**dass** der zweite Sequenzabschnitt der Hochfahrsequenz in Abhängigkeit von der mindestens einen abgerufenen Nutzerinformation zumindest teilweise dadurch angepasst wird, dass eine Dauer für den zweiten Sequenzabschnitt in Abhängigkeit von der mindestens einen abgerufenen Nutzerinformation angepasst wird.

9. Verfahren nach einem der voranstehenden Ansprüche,
**dadurch gekennzeichnet,**
**dass** eine Anzahl an Funktionen, die beim Ausführen der Programmanweisungen der Hochfahrsequenz, insbesondere des zweiten Sequenzabschnittes der Hochfahrsequenz, durchgeführt werden sollen, vordefiniert ist.

10. Verfahren nach einem der voranstehenden Ansprüche,
**dadurch gekennzeichnet,**
**dass** die mindestens eine Nutzerinformation mindestens einem Element aus der folgenden Liste entspricht: Angabe aus einem Nutzerprofil, Information aus einer Nutzungshistorie des Küchengeräts (2), Information aus einer Nutzereingabe, Information aus einem erfassten Nutzerverhalten, Information über eine Nutzervorliebe.

11. Verfahren nach einem der voranstehenden Ansprüche,
**dadurch gekennzeichnet,**
**dass** die mindestens eine Nutzerinformation eine Nutzungshäufigkeit des Küchengeräts (2) betrifft.

12. Verfahren nach einem der voranstehenden Ansprüche,
**dadurch gekennzeichnet,**
- **dass** die mindestens eine Nutzerinformation aus einem Speichermedium abgerufen wird, wobei das Speichermedium Teil des Küchengeräts (2) ist,
oder
- **dass** die mindestens eine Nutzerinformation aus einem Speichermedium abgerufen wird, wobei das Speichermedium Teil eines externen Geräts, insbesondere eines externen Servers oder eines mobilen Funkgeräts, ist.

13. Computerlesbares Speichermedium mit Programmanweisungen, die, wenn von einer Vorrichtung ausgeführt, die Vorrichtung dazu veranlassen, ein Verfahren nach einem der Ansprüche 1 bis 12 durchzuführen.

14. Küchengerät (2) zur Zubereitung von Lebensmitteln,
- mit einer Steuerungseinrichtung (12) und
- mit einer Kommunikationsschnittstelle (14), **dadurch gekennzeichnet,**
- **dass** die Steuerungseinrichtung (12) ein computerlesbares Speichermedium nach Anspruch 13 aufweist.

15. Küchengerät (2) nach Anspruch 14,
**dadurch gekennzeichnet,**
**dass** die Kommunikationsschnittstelle (14) dazu eingerichtet ist, die mindestens eine Nutzerinformation abzurufen und / oder die Hochfahrsequenz abzurufen.
